# EUROPÄISCHE PATENTSCHRIFT

(11) **EP 0 346 948 B1**
(45) Veröffentlichungstag und Bekanntmachung des Hinweises auf die Patenterteilung: **12.01.1994**
(21) Anmeldenummer: 89115135.9
(22) Anmeldetag: 25.11.1986
(51) Int. Cl.: E04B 1/19

(54) **Gerippe bestehend aus stabförmigen Elementen**
Framework consisting of bar-shaped elements
Ossature constituée d'élements en forme de barre

(30) Priorität: 02.12.1985 CH 5152/85
(43) Veröffentlichungstag der Anmeldung: 20.12.1989
(62) Teilanmeldung aus: 86906748.8
(73) Patentinhaber: ENTWURF PARTNER RUEDI ZWISSLER, CH-9055 Bühler (CH)
(72) Erfinder: Zwissler, Ruedi, CH-9055 Bühler (CH)
(74) Vertreter: Wenger, René

(56) Entgegenhaltungen:
- BE-A- 665 952
- FR-A- 2 331 745
- GB-A- 2 150 998

## Beschreibung

Die Erfindung bezieht sich auf ein Gerippe bestehend aus stabförmigen Elementen gemäss dem Oberbegriff von Anspruch 1. Derartige Gerippe ermöglichen den raschen Aufbau einer Raumstruktur für die verschiedensten Zwecke. Sie werden heute beispielsweise in zunehmendem Masse im Ausstellungsbau für den Aufbau von Schauwänden oder für die Konstruktion ganzer Standaufbauten eingesetzt. Denkbar ist aber auch die Konstruktion von Möbeln oder von behelfsmässigen Notunterkünften sowie von Kuppeln und dergleichen mehr.

Gattunsmässig vergleichbare Gerippe sind beispielsweise durch die US-A-4,290,244 oder die WO-A-84/01094 bekannt geworden. Bei den dort dargestellten und beschriebenen Konstruktionen sind die Verbindungselemente fest in die Enden der stabförmigen Elemente eingeprellt, wobei jeweils mehrere Verbindungselemente fest an einem Knotenpunkt angelenkt sind. Die Verbindungselemente haben keine eigentlichen Greifvorrichtungen, sondern sind mit querstehenden Zapfen versehen, welche in die zweiteiligen Kernteile ein geschlossen werden. Ein Nachteil dieser Konstruktionen besteht insbesondere darin, dass jeweils nur eine ganz bestimmte Struktur aufgebaut werden kann. Modifikationen oder das Anbauen oder Weglassen einzelner Elemente sind für den Anwender nicht möglich, da die einzelnen Bauteile des Gerippes fest miteinander verbunden sind. Das Entfernen eines einzelnen Bestandteils der Gesamtstruktur hätte zudem zur Folge, dass die gesamte Struktur instabil würde.

Verbindungselemente mit Greifvorrichtungen sind durch die DE-A-20 24 508 oder durch die DE-A-22 51 228 bekannt geworden. In beiden Fällen sind jedoch keine Kernteile zur Bildung eines Knotens vorgesehen.

Durch die BE-A-66 59 52 ist ein Kernteil bekannt geworden, an dessen Aussenseite Kupplungsmittel angeordnet sind. Die Verbindungselemente an den Enden der zu verbindenden Stäbe bestehen aus zwei Hälften, die mittels einer Klemmschraube zusammengeklemmt werden können. Die Klemmschraube hat dabei eine Doppelfunktion, indem sie einerseits die Fixierung des Verbindungselements auf dem Stab und anderseits die Feststellung der Greifvorrichtung ermöglicht. Ein Drehen des Stabes bei angeschlossenem Verbindungselement ist dabei jedoch nicht mehr möglich.

Ferner ist auch durch die FR-A-2 331 745 ein Kernteil bekannt geworden, das als Würfel mit sechs Achsen ausgebildet ist. Bei den anzuschliessenden stabförmigen Elementen handelt es sich um massiv ausgebildete Träger und als Verbindungsmittel dienen U-förmige Laschen, welche die Achsen des Würfels und die Enden der Träger übergreifen und welche fest mit den Trägern verschraubt sind. Eine Zerlegung des Gerippes in seine Einzelteile ist daher nicht möglich.

Es ist daher eine Aufgabe der Erfindung, ein Gerippe der eingangs genannten Art zu schaffen, welches eine grosse Vielfalt von Baustrukturen ermöglicht und welches in sämtliche Einzelteile zerlegt werden kann. Das Gerippe soll ausserdem Modifikationen an bestehenden Strukturen erlauben, so dass der Benützer nicht auf Fachkräfte angewiesen ist, wenn er vor Ort kurzfristig bauliche Aenderungen vor nehmen will. Ausserdem sollen vielseitige dreidimensionale Strukturen mit möglichst wenigen Einzelbauteilen realisiert werden können, wobei der Benützer die Einzelbauteile im Baukastenprinzip selber beliebig kombinieren kann. Diese Aufgabe wird erfindungsgemäss mit einem Gerippe gelöst, das die Merkmale in Anspruch 1 aufweist.

Die Achsen sind im Querschnitt rund ausgebildet, wobei die Greifvorrichtungen die Achsen formschlüssig umgreifen. Auf diese Weise sind vielseitige räumliche Konstruktionen möglich, wobei der Anschlusswinkel zwischen den stabförmigen Elementen und den Kernteilen stufenlos verändert werden kann. Die Greifvorrichtungen lassen sich abkuppeln, ohne dass eine Demontage des Kernteils erforderlich ist.

Je nach Verwendungszweck kann das Kernteil als Polyeder oder als flächiger Körper ausgebildet sein, dessen Achsen in einer Ebene liegen.

Die Funktion der Greifvorrichtung ist besonders effizient, wenn die Verbindungselemente in der Ebene der Rohrachse geteilt ausgebildet sind und wenn die Greifvorrichtung aus zwei Halbschalen besteht. Die Halbschalen sind dabei hohlzylindrisch zum Ergreifen einer Achse ausgebildet. Ersichtlicherweise können die beiden Halbschalen um eine Achse des Kernteils geschlossen werden, so dass eine gelenkige Verbindung entsteht, die jedoch jederzeit gelöst werden kann.

Wenn das Kernteil etwa viereckig ausgebildet ist und auf jeder Seite je zwei Achsabschnitte aufweist, von denen jeder eine Greifvorrichtung aufnehmen kann, lassen sich auf einer Seite zwei Stäbe anschliessen. Dies erleichtert den Bau raumförmiger Gebilde sowie die Konstruktion faltbarer Gebilde mit sich kreuzenden Stäben.

Wenn die Breite der Achsabschnitte an den Seiten des Kernteils jeweils der Breite einer Greifvorrichtung entspricht, ist eine stabile Verbindung gewährleistet.

Aus fabrikationstechnischen Gründen kann es vorteilhaft sein, wenn das Kernteil in zwei zusammenfügbare oder zusammensteckbare, formgleiche Hälften geteilt ist, welche auf der Innenseite mit sich diamentral gegenüberliegenden Zapfen und Bohrungen versehen sind.

Die Kernteile können ausserdem im Zentrum und/oder an den Ecken Bohrungen für Verbindungselemente, wie Schrauben, Druckknöpfe oder andere Achselemente aufweisen.

Zwei Verbindungselemente können drehfest zusammengefügt werden, wenn eines eine mehreckige Vertiefung und das andere einen formschlüssig in die Vertiefung passenden mehreckigen Flansch aufweist. Zwei Kernteile können auch im Abstand zueinander mit einem Distanzrohr verbunden sein.

Weitere Vorteile und Einzelmerkmale der Erfindung ergeben sich aus der nachstehenden Beschreibung und aus den Zeichnungen. Die Zeichnungen zeigen verschiedene Ausführungsbeispiele, die nachstehend genauer beschrieben werden. Es zeigen:
- Figur 1: ein Verbindungselement mit aufgeklappter Greifvorrichtung vor dem Einschieben in ein Rohrende,
- Figur 2: das Verbindungselement gemäss Figur 1 im geschlossenen und in das Rohrende eingeschobenen Zustand,
- Figur 3: eine Draufsicht auf ein Kernteil,
- Figur 4: einen Querschnitt durch eine Kernteil-Hälfte durch die Ebene I-I gemäss Figur 3,
- Figur 5: einen Querschnitt durch das Kernteil in der Ebene II-II gemäss Figur 3,
- Figur 6: ein kleines Kernteil,
- Figur 7: einen Querschnitt durch das Kernteil gemäss Figur 6,
- Figur 8: eine Verbindung von zwei verschiedenen Kernteilen,
- Figur 9: ein Flächengebilde mit jeweils sich kreuzenden Stabpaaren,
- Figur 10: ein Flächengebilde mit sich kreuzenden Stabpaaren und mit einer zusätzlichen pyramidenartigen Verstärkung,
- Figur 11: eine Detaildarstellung einer Pyramidenspitze,
- Figur 12: eine Draufsicht auf eine Deckenkonstruktion mit viereckigem Grundraster,
- Figur 13: eine Seitenansicht der Konstruktion gemäss Figur 12.

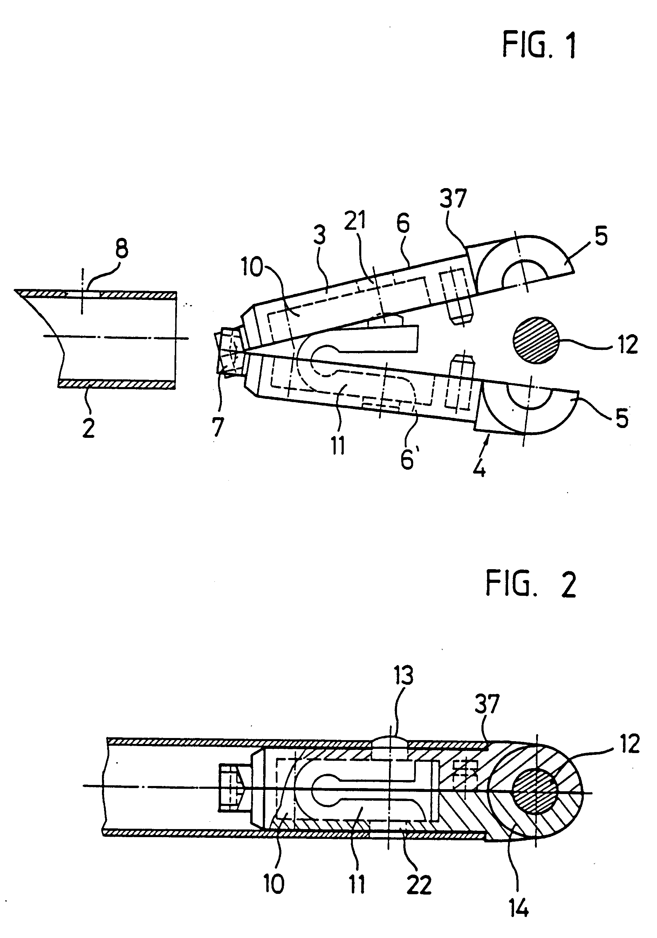

Wie in den Figuren 1 und 2 dargestellt, besteht ein typisches Verbindungselement 4 aus den beiden Hälften 6 und 6', welche vorzugsweise absolut identisch ausgebildet sind. Die Verbindungselemente werden vorzugsweise aus Kunststoffmaterial im Spritzgussverfahren hergestellt. Die beiden Hälften 6 und 6' werden an einer Einrastvorrichtung 7 zusammengesteckt, so dass sie scharnierartig geöffnet und geschlossen werden können.

Im Schaft 3 des Verbindungselements ist eine Ausnehmung 10 vorgesehen, die an einer Stelle in eine Oeffnung 21 übergeht. Die Ausnehmung 10 dient zur Aufnahme des Federelements 11, das im vorliegenden Ausführungsbeispiel als U-förmiger Bügel ausgebildet ist. Jedes Federelement trägt einen Nocken 13, der im geschlossenen Zustand aus der Oeffnung 21 ragt. Am unteren Schenkel des U-förmigen Bügels ist ein Positioniernocken 22 angeordnet, der jedoch nur teilweise in die Oeffnung 21 eindringt und lediglich zur Positionierung des Federelements 11 dient.

Jedes Verbindungselement ist mit einer Greifvorrichtung 14 versehen, die im vorliegenden Fall aus den beiden Halbschalen 5 und 5' besteht. Diese beiden Halbschalen sind so ausgebildet, dass sie eine Achse 12 formschlüssig ergreifen können. Eine umlaufende Schulter 37 begrenzt den Schaft 3, wobei die Schulter vorzugsweise eine Höhe aufweist, die etwa der Wandstärke der Rohre entspricht.

Mit dem in den Figuren 1 und 2 dargestellten Verbindungselement 4 soll das stabförmige Element 2 mit seinem rohrförmigen Ende mit der Achse 12 verbunden werden. Das rohrförmige Element 2 ist mit einer Oeffnung 8 versehen, deren Durchmesser etwas grösser ist als der Durchmesser des Nockens 13. Das Verbindungselement wird nun so weit geöffnet, dass die beiden Halbschalen 5 und 5' die Achse 12 ergreifen können. Dann wird das Verbindungselement geschlossen, wobei der Nocken 13 aus der Oeffnung 21 herausragt. Anschliessend wird der Schaft 3 des geschlossenen Verbindungselementes in das Element 2 eingeschoben. Zu diesem Zweck wird der Nocken 13 nach innen gepresst, bis er die Oeffnung 8 erreicht, wo er infolge der Federwirkung einrastet, wie Figur 2 zeigt. Zum Entfernen des Verbindungselementes aus dem Element 2 muss der Nocken 13 wiederum nach innen gepresst werden, so dass die Sperre gelöst wird. Dies kann auf einfachste Weise von Hand oder auch mit Hilfe eines Schraubenziehers oder dergleichen geschehen.

Weitere Einzelheiten der Verbindungselemente sind in der WO87/03346 des Anmelders beschrieben.

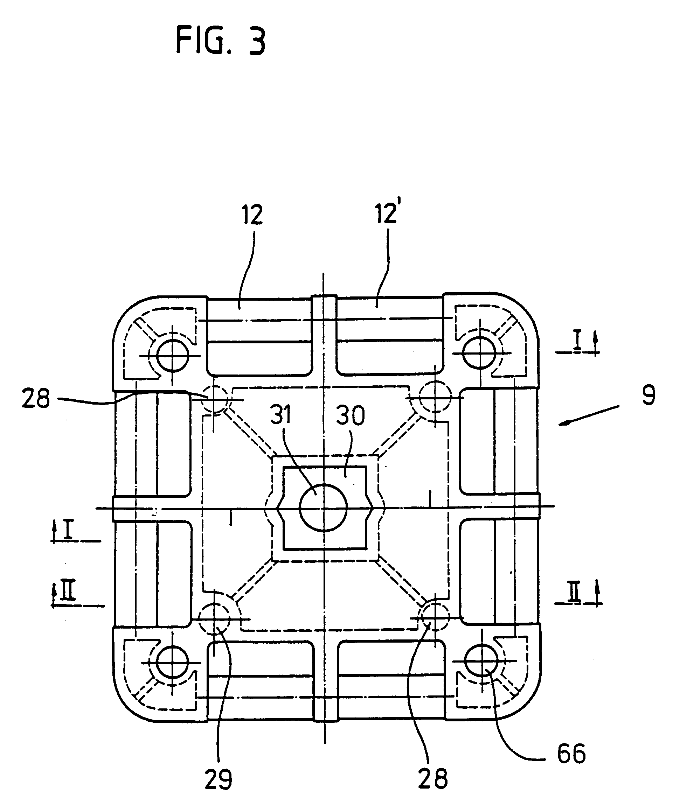

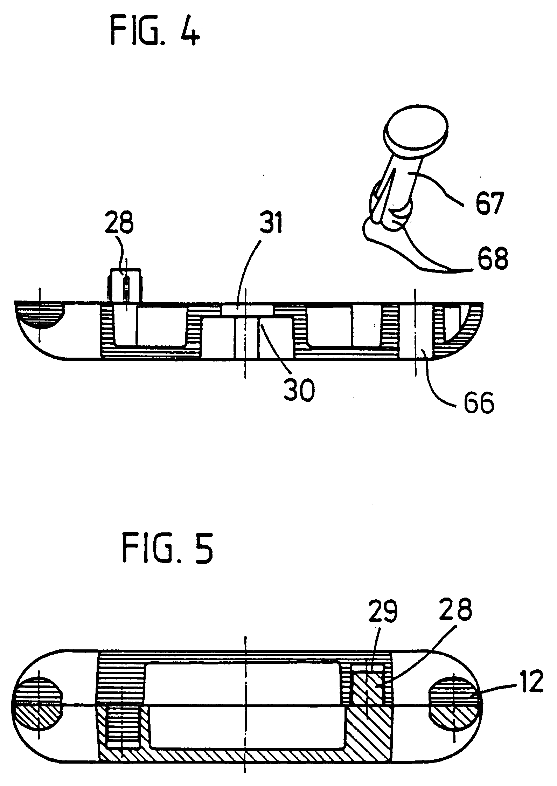

Die Figuren 3 bis 5 zeigen ein Kernteil 9 in der Form eines viereckigen, flächigen Körpers, an das mehrere stabförmige Elemente angeschlossen werden können. Aus fabrikationstechnischen Gründen ist dieses Teil ebenfalls in zwei Hälften geteilt, die formgleich ausgebildet sind und ineinander gesteckt werden können, wie insbesondere Figur 5 zeigt. Zu diesem Zweck sind auf der Innenseite sich diamentral gegenüberliegende Zapfen 28 und Bohrungen 29 vorgesehen. Am Umfangsbereich des Teils 9 sind auf jeder Seite je zwei Achsabschnitte 12 und 12' angeordnet, deren Breite jeweils der Breite einer Greifvorrichtung entspricht. Im Zentrum ist eine Vertiefung 30 vorgesehen, die einen mehreckigen Körper drehfest aufnehmen kann. Das Durchgangsloch 31 und die Bohrungen 66 dienen zur Aufnahme einer Schraube zum Verbinden des Kernteils mit anderen Bauteilen.

Anstelle von Schrauben könnte auch ein Druckknopf 67 verwendet werden, dessen zwei federnde Nasen 68 zusammenpressbar sind. Der gleiche Druckknopf könnte auch durch die geschlossenen Halbschalen eines Verbindungselements gesteckt werden.

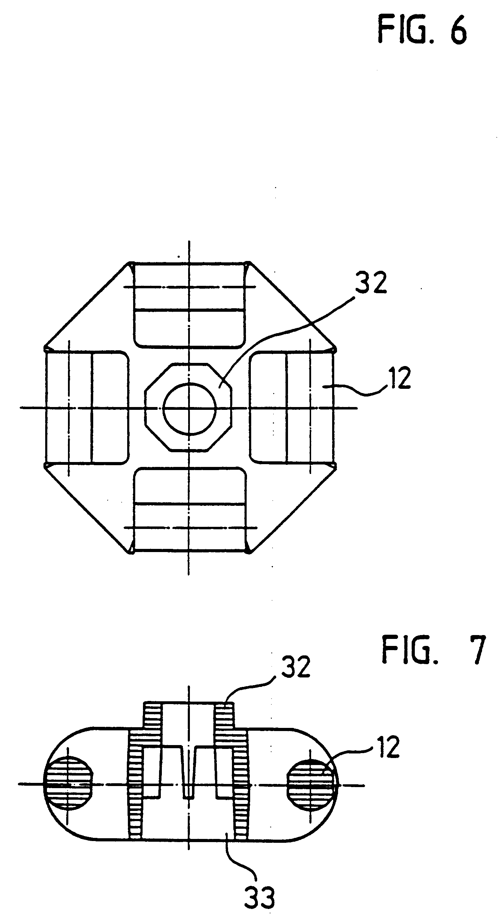

In den Figuren 6 und 7 ist ein anderer Typ eines Kernteils dargestellt, welches etwas kleiner ist und an jeder Seite nur einen einzigen Achsabschnitt 12 aufweist. Auf einer Seite ist ein Flansch 32 angeordnet, der formschlüssig in die Vertiefung 30 des Kernteils gemäss Figur 3 passt. Die Vertiefung 33 dient zur Aufnahme eines Schraubenkopfes oder des Flansches eines benachbarten Kernteils.

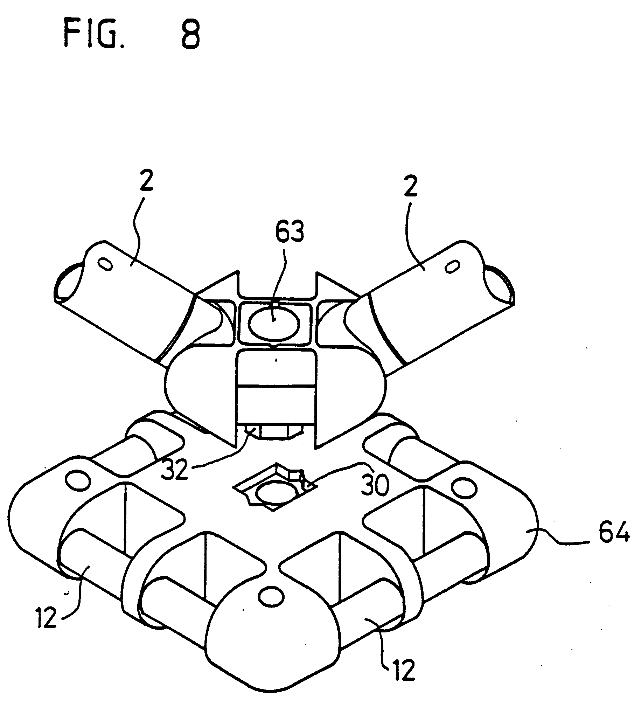

Figur 8 zeigt die Kombination zweier Kernteile gemäss den Figuren 3 und 6. Das kleine Kernteil 63 wird dabei in das grosse Kernteil 64 eingesteckt, wobei der Flansch 32 in die Vertiefung 30 eindringt. Mit einer nicht dargestellten Befestigungsschraube werden die beiden Teile 63 und 64 kraftschlüssig miteinander verbunden.

Selbstverständlich können die Kernteile auch andere Konfigurationen aufweisen und beispielsweise sechseckig, dreieckig oder auch als Polyeder ausgebildet sein.

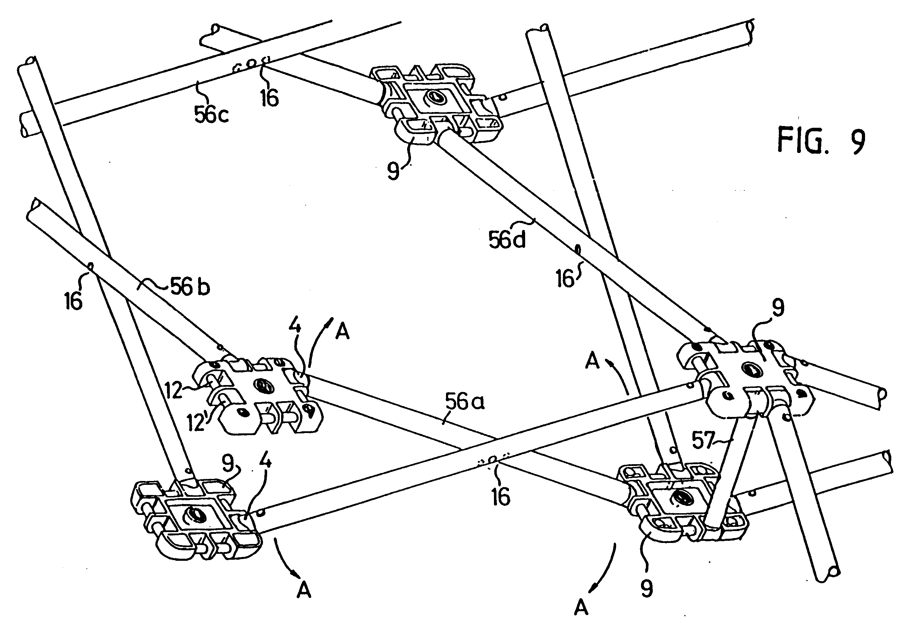

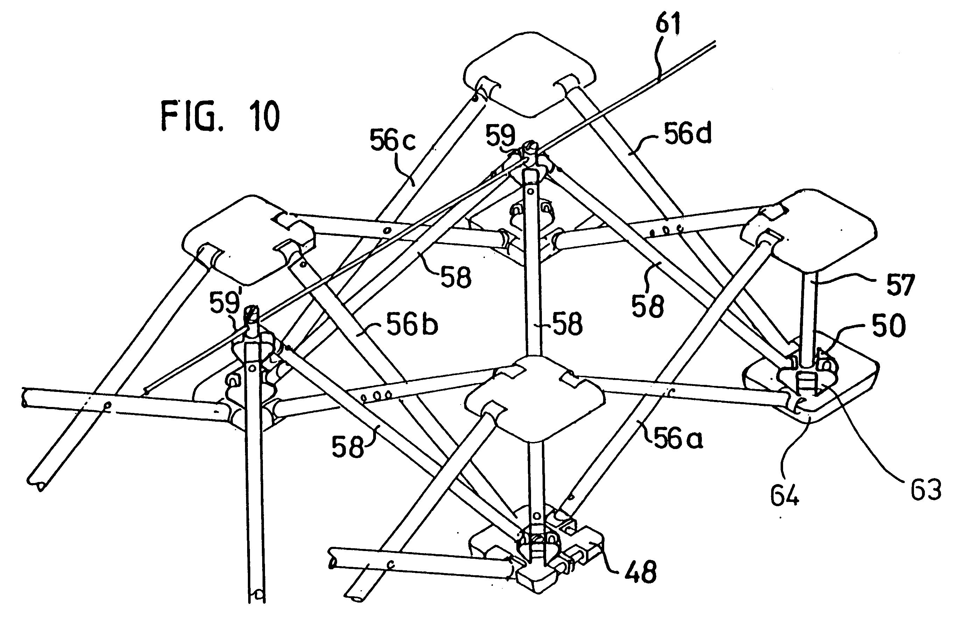

In den Figuren 9 und 10 sind Gerippestrukturen 1 beschrieben, die ein flächiges Raumgebilde darstellen. Es sind einzelne Stabpaare oder Scheren 56 zu geschlossenen Einheiten mit polygonem Raster miteinander verbunden. In Figur 9 ist eine derartige geschlossene Einheit, bestehend aus den vier Scheren 56a, 56b, 56c und 56d dargestellt. Die Enden der Scheren 56 sind mittels der grossen Kernteile 9 gelenkig miteinander verbunden. Hier wird der Zweck der beiden nebeneinander liegenden Achsabschnitte 12 und 12' besonders deutlich. Da die einzelnen Rohre der Scheren 56 jeweils um eine Rohrstärke versetzt zueinander sind, ist wechselweise ein Anschluss an einem Achsabschnitt 12 oder 12' erforderlich. Jede geschlossene Einheit kann zu einem Gebilde zusammengefaltet werden, bei dem alle Stäbe der einzelnen Scheren 56 beinahe parallel zueinander verlaufen und nahe beieinander liegen. Jede einzelne Schere führt dabei um die Kreuzungsstelle 16 eine Schwenkbewegung aus, wie sie mit Pfeilrichtung A angedeutet ist. An den Kreuzungsstellen 16 sind die stabförmigen Elemente 2 mittels Schrauben oder dergleichen gelenkig miteinander verbunden.

Zur Stabilisierung einer geschlossenen Einheit werden zwei Kernteile 9 mit einem Distanzrohr 57 verbunden. Dieses kann, wie in Figur 9 an den Achsen 12 oder, wie in Figur 10 dargestellt, im Zentrum der Kernteile 9 angeschlossen werden. Das Distanzrohr kann auf beiden Seiten mit dem bereits erwähnten Druckknopf versehen sein.

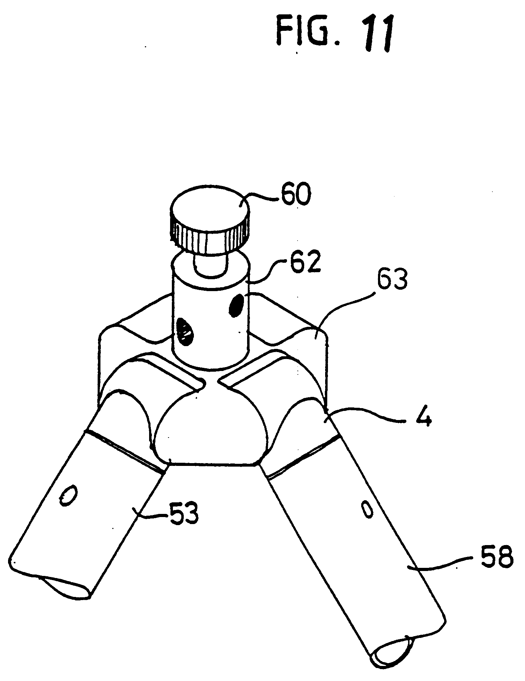

In Figur 10 ist wiederum eine geschlossene Einheit aus vier miteinander verbundenen Scheren 56a, 56b, 56c und 56d dargestellt, wie bereits in Figur 9 gezeigt wurde. Die geschlossene Einheit ist jedoch mit einer pyramidenartigen Stabstruktur verstärkt, wobei jeder Stab 58 dieser Stabstruktur an einer Verbindungsstelle zweier Scheren angeschlossen ist. Die Anschlussstelle ist dabei etwa gemäss Figur 8 aufgebaut und besteht aus einem kleinen Kernteil 63, das auf einem grossen Kernteil 64 befestigt ist. Die Pyramidenstäbe 58 treffen sich an der Pyramidenspitze 59 und sind dort zu einem Knoten verbunden, wie dies bei spielsweise in Figur 11 dargestellt ist. In Figur 10 ist auf der linken Seite eine weitere geschlossene Einheit mit einer Pyramidenspitze 59' teilweise dargestellt. Die pyramidenartigen Stabstrukturen dienen dazu, die geschlossenen Einheiten in der horizontalen Ebene zu verstärken, so dass beispielsweise Deckenkonstruktionen gebaut werden können. Vorzugsweise werden die benachbarten Pyramidenspitzen 59, 59' usw. über einen Seilzug 61 miteinander verbunden. Anstelle des Seilzugs kann selbstverständlich auch ein weiterer Stab oder eine Fläche verwendet werden. Der Seilzug hat jedoch den Vorteil, dass das gesamte Gerippe zusammengefaltet werden kann, wobei der Seilzug im zusammengefalteten Zustand lose herunterhängt. Ersichtlicherweise muss die Länge der Pyramidenstäbe 58 derart gewählt werden, dass sie das Zusammenfalten der Scheren 56 nicht behindern. Die Pyramidenspitzen können an einer Deckenkonstruktion sowohl nach oben als auch nach unten oder nach beiden Richtungen gerichtet sein. Mit dem Seilzug 61 kann der Durchhang einer Deckenkonstruktion korrigiert werden. Die Pyramidenspitzen schaffen zudem eine weitere Anschlussebene, auf der mittels Kernteilen weitere Strukturen aufgebaut werden können.

Figur 11 zeigt eine Pyramidenspitze, wobei das kleine Kernteil 63 mit einer Seilzughalterung 62 versehen ist. In diese kann ein Seilzug durchgeführt und mit einer Feststellschraube 60 festgeklemmt werden.

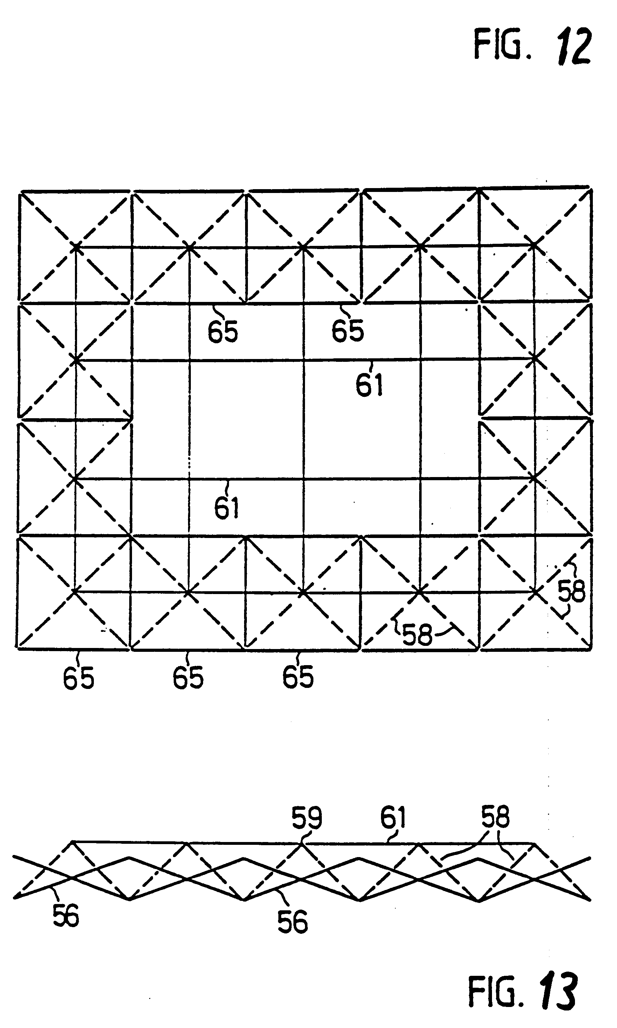

Die Figuren 12 und 13 zeigen eine Konstruktion mit horizontaler Ausdehnung bestehend aus mehreren aneinandergereihten geschlossenen Einheiten 65. Die Pyramidenstäbe 58 sind als unterbrochene Linien dargestellt. Die Seilzüge 61 verbinden die benachbarten Pyramidenspitzen geradlinig miteinander.

Die hier dargestellten und beschriebenen Gerippekonstruktionen stellen lediglich Einzelbeispiele dar. Ersichtlicherweise kann eine beinahe unbeschränkte Zahl von verschiedenen Raumformen mit unterschiedlichem Grundraster aufgebaut werden. So können insbesondere auch kuppelartige Gebilde errichtet werden, die z.B. mit einer geeigneten Bespannung als Notunterkünfte dienen können.

## Patentansprüche

1. Gerippe bestehend aus stabförmigen Elementen (2), welche zu einem raumförmigen Gebilde zusammenbaubar sind, wobei die Enden der stabförmigen Elemente rohrförmig ausgebildet sind und mit Verbindungselementen (4) versehen sind, die eine Greifvorrichtung (14) aufweisen, und wobei mehrere stabförmige Elemente mit ihren Greifvorrichtungen formschlüssig und lösbar an ein Kernteil (9) anschliessbar sind, das als mehreckiger Körper ausgebildet ist, an dessen Aussenseiten Kupplungsmittel angeordnet sind, dadurch gekennzeichnet, dass die Kupplungsmittel Achsabschnitte (12) mit rundem Querschnitt sind, dass jedes Verbindungselement einen Schaft (3) aufweist, der in das rohrförmige Ende des stabförmigen Elements eingeschoben ist und dass die Greifvorrichtungen die Achsabschnitte in der Form einer gelenkigen Verbindung umgreifen.

2. Gerippe nach Anspruch 1, dadurch gekennzeichnet, dass das Kernteil als Polyeder ausgebildet ist.

3. Gerippe nach Anspruch 2, dadurch gekennzeichnet, dass das Kernteil als flächiger Körper ausgebildet ist, dessen Achsen in einer Ebene liegen.

4. Gerippe nach Anspruch 3, dadurch gekennzeichnet, dass das Kernteil etwa viereckig ausgebildet ist und auf jeder Seite je zwei Achsabschnitte aufweist, von denen jeder eine Greifvorrichtung aufnehmen kann.

5. Gerippe nach einem der Ansprüche 1 bis 4, dadurch gekennzeichnet, dass die Breite der Achsabschnitte an den Seiten des Kernteils jeweils der Breite einer Greifvorrichtung entspricht.

6. Gerippe nach einem der Ansprüche 1 bis 5, dadurch gekennzeichnet, dass das Kernteil in zwei zusammenfügbare, formgleiche Hälften geteilt ist.

7. Gerippe nach Anspruch 6, dadurch gekennzeichnet, dass die beiden Hälften auf der Innenseite mit sich diametral gegenüberliegenden Zapfen 28 und Bohrungen 29 versehen sind.

8. Gerippe nach Anspruch 3 oder 4, dadurch gekennzeichnet, dass zwei Kernteile (9) parallel zueinander übereinander angeordnet sind und mit einem Distanzrohr miteinander verbunden sind.

9. Gerippe nach Anspruch 3 oder 4, dadurch gekennzeichnet, dass das Kernteil im Zentrum eine Bohrung und eine mehreckige Vertiefung oder einen mehreckigen Flansch zur Aufnahme eines Verbindungselements, bzw. zum drehfesten Verbinden zweier Kernteile aufweist.

10. Gerippe nach Anspruch 3 oder 4, dadurch gekennzeichnet, dass das Kernteil an den Ecken Bohrungen (66) zur Aufnahme von Verbindungselementen aufweist.

11. Gerippe nach einem der Ansprüche 1 bis 10, dadurch gekennzeichnet, dass die Verbindungselemente in der Ebene der Rohrachse geteilt ausgebildet sind und dass die Greifvorrichtung aus zwei Halbschalen besteht.

## Claims

1. A framework consisting of rod-like elements (2) which can be assembled to form a space frame structure, wherein the ends of the rod-like elements are tubular and are provided with connecting elements (4) which have a gripping device (14), and wherein a plurality of rod-like elements can be positively lockingly and releasably connected by their gripping devices to a core member (9) which is in the form of a polygonal body, on the outside of which are arranged coupling means, characterized in that the coupling means are shaft portions (12) of round cross-section, that each connecting element has a shank (3) which is inserted into the tubular end of the rod-like element, and that the gripping devices embrace the shaft portions in the form of a pivotal connection.

2. A framework according to claim 1 characterized in that the core member is in the form of a polyhedron.

3. A framework according to claim 2 characterised in that the core member is in the form of a flat body whose axes lie in one plane.

4. A framework according to claim 3 characterized in that the core member is of an approximately quadrangular configuration and on each side has two shaft portions, each of which can receive a gripping device.

5. A framework according to one of claims 1 to 4 characterized in that the width of the shaft portions at the sides of the core member respectively correspond to the width of a gripping device.

6. A framework according to one of claims 1 to 5 characterised in that the core member is divided into two halves of the same shape which can be fitted together.

7. A framework according to claim 6 characterised in that the two halves are provided on the inside with mutually diametrally opposite pins (28) and bores (29).

8. A framework according to claim 3 or to claim 4 characterized in that the two core members (9) are arranged parallel to each other one above the other and are connected together by way of a spacer tube.

9. A framework according to claim 3 or claim 4 characterized in that the core member has in the centre a bore and a polygonal recess or a polygonal flange for receiving a connecting element or for non-rotatably connecting two core members.

10. A framework according to claim 3 or claim 4 characterized in that at the corners the core member has bores (66) for receiving connecting elements.

11. A framework according to one of claims 1 to 10 characterized in that the connecting elements are divided in the plane of the tube axis and that the gripping device comprises two half shells.

## Revendications

1. Ossature constituée d'éléments en forme de barres (2) pouvant être assemblés pour constituer une structure spatiale, dans laquelle les extrémités des éléments en forme de barres ont une forme tubulaire et sont pourvues d'éléments de liaison (4) comportant un dispositif formant griffe (14), et dans laquelle plusieurs éléments en forme de barres, avec leurs dispositifs formant griffes, peuvent être raccordés par complémentarité de forme et de façon détachable à un noyau (9) qui est conçu comme un élément polygonal sur les côtés extérieurs duquel sont disposés des moyens d'accouplement, caractérisée en ce que les moyens d'accouplement sont des segments d'axe (12) à section ronde, en ce que chaque élément de liaison comporte une tige (3) qui est insérée dans l'extrémité tubulaire de l'élément en forme de barre, et en ce que les dispositifs formant griffes entourent les segments d'axe sous la forme d'une liaison articulée.

2. Ossature selon la revendication 1, caractérisée en ce que le noyau est conçu comme un polyèdre.

3. Ossature selon la revendication 2, caractérisée en ce que le noyau est conçu comme un élément plan dont les axes se trouvent dans un plan.

4. Ossature selon la revendication 3, caractérisée en ce que le noyau est sensiblement quadrangulaire et comporte de chaque côté deux segments d'axe pouvant recevoir chacun un dispositif formant griffe.

5. Ossature selon l'une des revendications 1 à 4, caractérisée en ce que la largeur des tronçons d'axe, au niveau des côtés du noyau, correspond à la largeur d'un dispositif formant griffe.

6. Ossature selon l'une des revendications 1 à 5, caractérisée en ce que le noyau est divisé en deux moitiés de formes identiques et pouvant être réunies.

7. Ossature selon la revendication 6, caractérisée en ce que les deux moitiés sont pourvues, sur le côté intérieur, de tétons 28 et de perçages 29 diamétralement opposés.

8. Ossature selon la revendication 3 ou 4, caractérisée en ce que deux noyaux (9) sont superposés parallèlement l'un par rapport à l'autre et reliés entre eux par un tube d'écartement.

9. Ossature selon la revendication 3 ou 4, caractérisée en ce que le noyau présente, au centre, un perçage et un creux polygonal ou une collerette polygonale destinés à recevoir un élément de liaison ou à relier deux noyaux solidaires en rotation.

10. Ossature selon la revendication 3 ou 4, caractérisée en ce que le noyau présente, aux coins, des perçages (66) destinés à recevoir des éléments de liaison.

11. Ossature selon l'une des revendications 1 à 10, caractérisée en ce que les éléments de liaison sont divisés dans le plan de l'axe de tube, et en ce que le dispositif formant griffe se compose de deux demi-coques.
